# EUROPEAN PATENT APPLICATION

(11) **EP 4 708 974 A1**
(43) Date of publication of application: **11.03.2026**
(21) Application number: 23935711.4
(22) Date of filing: 07.11.2023
(51) Int. Cl.: H04W 48/16, H04L 12/28, H04W 4/70

(54) **NETWORK DISTRIBUTION METHOD AND APPARATUS, READABLE STORAGE MEDIUM, AND HOUSEHOLD DEVICE**

(30) Priority: 04.05.2023 CN 202310499658
(71) Applicant: Midea Group (Shanghai) Co., Ltd., Shanghai 201702 (CN); Midea Group Co., Ltd., Foshan, Guangdong 528311 (CN)
(72) Inventor: XIAN, Zhixiong, Shanghai 201702 (CN); LIU, Yafen, Shanghai 201702 (CN)
(74) Representative: Ran, Handong
(86) International application number: PCT/CN2023/130286
(87) International publication number: WO 2024/227341

(57) **Abstract**

Provided in the present application are a network distribution method and apparatus, a readable storage medium, and a household device, belonging to the technical field of the Internet of Things. The network distribution method executed by a terminal comprises: when a first device is in an undistributed state, acquiring device information of the first device; and sending the device information to a server, the server sending the device information to a second device, and the second device sending first network distribution information to the first device, so as to perform network distribution on the first device, wherein the first network distribution information is network distribution information of the second device.

## Description

The present application claims priority of Chinese Patent Application No. 202310499658.0, in the title of "NETWORK DISTRIBUTION METHOD AND APPARATUS, READABLE STORAGE MEDIUM, AND HOUSEHOLD DEVICE", filed on May 04, 2023, in the China National Intellectual Property Administration, the entire contents of which are hereby incorporated by reference in their entirety.

### TECHNICAL FIELD

The present disclosure relates to the technical field of Internet of Things, and in particular to a network distribution method, an apparatus, a readable storage medium, and a household device.

### BACKGROUND

In the Internet of Things, network distribution for devices includes: a terminal self-discovery network distribution, a device friend discovery network distribution, and a household device discovery of other devices for network distribution. The remaining network distribution methods may require a user to manually authorize the network distribution, which may make the operation process of network distribution on the household devices more complex.

### SUMMARY OF THE DISCLOSURE

The present disclosure is intended to solve one of the technical problems in the prior art or related art.

To this end, the first aspect of the present disclosure proposes a network distribution method.

The second aspect of the present disclosure proposes a network distribution method.

The third aspect of the present disclosure proposes a network distribution method.

The fourth aspect of the present disclosure proposes a network distribution device.

The fifth aspect of the present disclosure proposes a network distribution device.

The sixth aspect of the present disclosure proposes a network distribution device.

The seventh aspect of the present disclosure proposes a network distribution device.

The eighth aspect of the present disclosure proposes a readable storage medium.

The ninth aspect of the present disclosure provides a computer program product.

The tenth aspect of the present disclosure provides a household device.

In the first aspect, the present disclosure provides a network distribution method, performed by a terminal and including: while a first device is not network-distributed, obtaining device information of the first device; and sending the device information to a server for the server to send the device information to a second device, for causing the second device to send first network distribution information to the first device to perform network distribution on the first device; wherein the first network distribution information is network distribution information of the second device.

In the second aspect, the present disclosure provides a network distribution method, performed by a server and including: receiving device information from a terminal, wherein the device information is device information of a first device; and sending the device information to a second device for the second device to send first network distribution information to the first device to perform network distribution on the first device, wherein the first network distribution information is network distribution information of the second device.

In the third aspect, the present disclosure provides a network distribution method, performed by a second device and including: in a case of receiving device information from a server, establishing a communication connection with a first device through the device information, wherein the device information is device information of the first device; and sending first network distribution information to the first device to perform network distribution on the first device, wherein the first network distribution information is network distribution information of the second device.

In the fourth aspect, the present disclosure provides a network distribution apparatus, performed by a terminal and including: a first obtaining module, configured to obtain device information of a first device while the first device is not network-distributed; and a first transmission module, configured to send the device information to a server for the server to send the device information to a second device, for causing the second device to send first network distribution information to the first device to perform network distribution on the first device; wherein the first network distribution information is network distribution information of the second device.

In the fifth aspect, the present disclosure provides a network distribution apparatus, performed by a server and including: a first receiving module, configured to receive device information from a terminal, wherein the device information is device information of a first device; and a second transmission module, configured to send the device information to a second device for the second device to send first network distribution information to the first device to perform network distribution on the first device, wherein the first network distribution information is network distribution information of the second device.

In the sixth aspect, the present disclosure provides a network distribution apparatus, performed by a second device and including: a communication module, configured to establish a communication connection with a first device through the device information in a case of receiving device information from a server, wherein the device information is device information of the first device; and a third transmission module, configured to send first network distribution information to the first device to perform network distribution on the first device, wherein the first network distribution information is network distribution information of the second device.

In the seventh aspect, the present disclosure provides a network distribution apparatus, including: a memory, storing a program or instructions; and a processor, configured to execute the program or instructions to perform the method as above, thus having all the beneficial technical effects of the network distribution method in the above embodiments, which will not be described in detail herein.

In the eighth aspect, the present disclosure provides a readable storage medium, storing a program or instructions; wherein the program or instructions is configured to, when executed by a processor, perform the method as above, thus having all the beneficial technical effects of the network distribution method in the above embodiments, which will not be described in detail herein.

In the ninth aspect, the present disclosure provides a computer program product, including a computer program; wherein the computer program is configured to, when executed by a processor, perform the method as above, thus having all the beneficial technical effects of the network distribution method in the above embodiments, which will not be described in detail herein.

In the tenth aspect, the present disclosure provides a household device, including: a network distribution apparatus as above; and/or a readable storage medium as above; and/or a computer program product as above, thus having all the beneficial technical effects of the computer program product in the above embodiments, which will not be described in detail herein.

In the present embodiments of the present disclosure, the server receives the device information of the first device sent by the terminal, and the server forwards the device information to the second device that has been network-distributed. The second device can establish a communication connection with the first device based on the device information, and send its own first network distribution information to the first device to perform network distribution on the first device, thereby eliminating the need for the user to manually distribute network for the first device. The second device can accurately locate the first device required to be network-distributed based on the device information of the first device, and accurately send the first network distribution information to the first device, thereby avoiding mis-distributing network for other devices.

Additional aspects and advantages of the present disclosure will become apparent in the description section below or through practice of the present disclosure.

### BRIEF DESCRIPTION OF THE DRAWINGS

The above and/or additional aspects and advantages of the present disclosure will become apparent and will be readily understood from the description of the embodiments combined with the following appended drawings.
FIG. 1 is a flowchart of a network distribution method according to some embodiments of the present disclosure.
FIG. 2 is a flowchart of a network distribution method according to some embodiments of the present disclosure.
FIG. 3 is a flowchart of a network distribution method according to some embodiments of the present disclosure.
FIG. 4 is a flowchart of a network distribution method according to some embodiments of the present disclosure.
FIG. 5 is a flowchart of a network distribution method according to some embodiments of the present disclosure.
FIG. 6 is a flowchart of a network distribution method according to some embodiments of the present disclosure.
FIG. 7 is a flowchart of a network distribution method according to some embodiments of the present disclosure.
FIG. 8 is a schematic block diagram of a network distribution apparatus according to some embodiments of the present disclosure.
FIG. 9 is a schematic block diagram of a network distribution apparatus according to other embodiments of the present disclosure.
FIG. 10 is a schematic block diagram of a network distribution apparatus according to further other embodiments of the present disclosure.
FIG. 11 is a schematic block diagram of a network distribution apparatus according to still other embodiments of the present disclosure.
FIG. 12 is a schematic block diagram of a household device according to some embodiments of the present disclosure.

### DETAILED DESCRIPTION

In order to more clearly understand the above-mentioned purposes, features and advantages of the present disclosure, the following further describes the present disclosure in more detail in conjunction with the accompanying drawings and specific embodiments. It should be noted that, where there is no conflict, the embodiments and features in the embodiments can be combined with each other.

Many specific details are set forth in the following description to facilitate a full understanding of the present disclosure. However, the present disclosure may be implemented in other ways that are different from those described herein. Therefore, the scope of the present disclosure is not limited by the specific embodiments disclosed below.

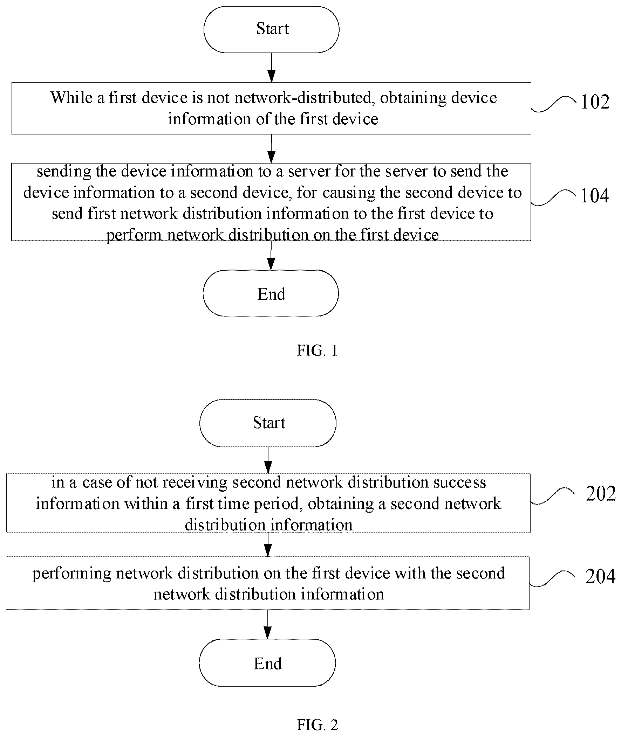

The following describes some embodiments of a network distribution method, an apparatus, a readable storage medium, a computer program product, and a household device according to the present disclosure with reference to FIGS. 1 to 12.

It can be understood that the method of "device friend discovery network distribution" in the related art refers to a process where a network-distributed device searches blindly for a non-network-distributed device, which is likely to mistakenly trigger network distribution for devices that do not need network distribution.

Therefore, according to some embodiments of the present disclosure, as shown in FIG. 1, a network distribution method is proposed, which is performed by a terminal. The network distribution method includes operations at blocks illustrated herein.

At block 102: while a first device is not network-distributed, obtaining device information of the first device.

At block 104: sending the device information to a server for the server to send the device information to a second device, for causing the second device to send first network distribution information to the first device to perform network distribution on the first device.

The first network distribution information is network distribution information of the second device.

The present disclosure defines a network distribution method for household devices, which is performed by a terminal. After the terminal obtains the device information of the first device, the terminal sends the device information to the server for the server to forward the device information to the second device that has been network-distributed. Since the second device is in communication connection with the first device, the first network distribution information of the first device is sent to the first device through the second device to complete the network distribution of the first device, without the need for the user to manually enter network distribution information, thereby simplifying the process for the user to perform network distribution on the first device. Moreover, based on the device information of the first device, the second device can accurately locate the first device to which the network is required to be distributed, and accurately send the first network distribution information to the first device, thereby avoiding misdistribution of other devices.

For example, the user scans an identification code corresponding to the first device with the terminal to obtain the device information corresponding to the first device, and after obtaining the device information, the terminal automatically performs the step of sending the device information of the first device to the server. That is, the user only needs to scan the identification code of the first device with the terminal, so as to send the corresponding device information to the server.

It should be noted that the second device is a device that is matched with the terminal. For example, the terminal and the second device are bound under the same account.

For example, the second device is a network-distributed device. The user logs in to a corresponding IoT account through the terminal, and the second device is bound to this IoT account. After the user sends the device information to an IoT server through the terminal, the IoT server can automatically find the matching second device and send the device information to the second device.

Specifically, the first device is in communication connection with the second device, the second device sends its own first network distribution information to the first device, and the first device can complete the network distribution based on the first network distribution information. The first device is in a state of waiting to be network-distributed, so as to ensure that the second device can establish a communication connection with the first device.

For example, the first device may be connected to the second device via near field communication, for example, the first device and the second device are connected via Bluetooth.

For example, the first device may be connected to the second device via WIFI.

In the present embodiments, when the user obtains the device information of the first device through the terminal and sends the device information to the server, the server can automatically obtain an authentication information of the login account of the terminal, and accordingly find the second device. During the network distribution process to the terminal through the first network distribution information of the second device, the authorization process can be automatically completed, without the need for the user to re-authorize the first device to which the network has been distributed, thereby further simplifying the user's operating process.

In the present embodiments of the present disclosure, the server receives the device information of the first device sent by the terminal, and the server forwards the device information to the second device that has been network-distributed. The second device can establish a communication connection with the first device based on the device information, and send its own first network distribution information to the first device to perform network distribution on the first device, thereby eliminating the need for the user to manually distribute network for the first device. The second device can accurately locate the first device required to be network-distributed based on the device information of the first device, and accurately send the first network distribution information to the first device, thereby avoiding mis-distributing network for other devices.

In the above embodiments, the number of the device information may be at least two; the sending the device information to a server includes: sending the information of the at least two devices to the server, for the sever to send the information of the at least two devices to the second device.

The embodiments provide a specific process for distributing network to multiple first devices that are not network-distributed.

Specifically, in a situation where the user needs to distribute network to multiple first devices, the device information of the multiple first devices is transmitted to the server through the terminal. Upon receiving the device information, the server can directly send the device information to the second device. The terminal and the server perform the process of distributing network to the first device to achieve the network distribution to multiple first devices.

For example, a microwave oven, an air conditioner, and a washing machine in a home system are first devices that are not network-distributed, and a vacuum cleaner is a second device that is already network-distributed. When the user needs to distribute network to the microwave oven, the air conditioner, and the washing machine through the terminal, he/she can scan QR codes for the microwave oven, the air conditioner, and the washing machine through the terminal, respectively. The server then sends the corresponding device information of the microwave oven, the air conditioner, and the washing machine to the vacuum cleaner, such that the vacuum cleaner can send the first network distribution information to the microwave oven, the air conditioner, and the washing machine respectively to complete the network distribution for the microwave oven, the air conditioner, and the washing machine.

In the embodiments of the present disclosure, during the network distribution process to the multiple first devices that are not network-distributed, the user can use the terminal to send the device information corresponding to the multiple first devices to the server at one time to distribute network to the multiple first devices in batches, such that the user does not need to wait for the network distribution to the previous first device before distributing network to another first device, thereby further simplifying the user's operating process.

In any of the above embodiments, the sending the information of the at least two devices to the server includes: sending a first device information included in the information of the at least two devices to the server for the server to send the first device information to the second device, where the first device information is device information filtered based on an acquisition time included in the information of the at least two devices; and in a case of receiving a first network distribution success information from the server, sending a second device information included in the information of the at least two devices to the server for the server to send the second device information to the second device, where the second device information includes device information other than the first device information included in the information of the at least two devices.

In the embodiments, the terminal sends the device information of multiple first devices to the server, and the server sends the first device information included in the multiple device information to the second device. After the second device completes the network distribution for the first device corresponding to the first device information, the second device sends a first network distribution success information back to the server. After the server sends the first network distribution information to the terminal, the terminal continues to send the second device information included in the multiple device information to the server to continue the network distribution for the first device corresponding to the second device information.

For example, when the second device is unable to successfully perform network distribution on the first device corresponding to the first device information, the server will not receive the corresponding first network success information, i.e., the terminal will not receive the first network distribution information. In response thereto, the terminal can determine that the second device cannot continue to perform network distribution on the first device, so it will not continue to send the second device information to the server.

In the embodiments of the present disclosure, the terminal sends the device information of multiple first devices to the server in batches, and only when the first device of the previous batch has been successfully network-distributed, the terminal continues to send the device information of the remaining first devices, thereby improving the success rate of network distribution after the terminal has sent the device information and avoiding a large number of invalid actions of the terminal sending the device information.

In any of the above embodiments, the device information includes at least one of the following: an identification information, a model information, and a communication address information.

In the embodiments, it is defined that the device information of the first device includes at least one of the identification information, the model information, and the communication address information.

Specifically, by defining the device information, it is ensured that the second device in the network-distributed state can find the corresponding first device through the device information and perform network distribution on the first device.

For example, the identification information includes a unique device identity document (ID) of the first device, and the second device can accurately find the corresponding first device through the identification information. The model information includes a device model.

For example, the communication address information includes a Bluetooth address information of the first device.

In the embodiments of the present disclosure, after the second device receives the device information of the first device sent by the server, the second device can quickly find the first device based on the device information and distribute network for the first device, by defining the device information to include at least one of the model information, the identification information, and the communication address information of the first device.

In any of the above embodiments, before sending the device information to the server, the method further includes: sending a terminal information of the terminal to the server, for the server to search for at least two second devices based on the terminal information, for causing the server to send the device information to the at least two second devices in a case of receiving the device information.

In the embodiments, before the terminal sends the device information of the first device to the server, the server needs to find a network-distributed second device that matches the terminal, and after the second device is found, the device information of the first device is sent to the second device.

Specifically, the terminal is bound to the second device in the network-distributed state, and after receiving the terminal information, the server can find the second device bound to the terminal through the terminal information. It should be noted that the number of second devices to be bound to the terminal information may be one or more.

For example, the IoT account logged in by the terminal is bound to the second device, and the server can find the second device bound to the terminal through the IoT account information logged in by the terminal. That is, the terminal and the second device are bound under the same IoT account. The server searches for device in the network-distributed state under the same IoT account, and takes the device as the second device.

In the embodiments of the present disclosure, after the terminal establishes a communication connection with the server, the terminal sends the terminal information to the server, and the server can find the second device bound to the terminal information according to the terminal information, such that the server can subsequently transmit the device information of the first device to the second device, thereby ensuring that the second device that has been network-distributed is a device bound to the terminal, and avoiding network distribution failures caused by network distribution of the first device through other devices.

As shown in FIG. 2, in any of the above embodiments, after the sending the device information to a server, the method further includes operation at blocks illustrated herein.

At block 202: in a case of not receiving second network distribution success information within a first time period, obtaining second network distribution information.

At block 204: performing network distribution on the first device with the second network distribution information.

In the embodiments, in the event of a failure to perform network distribution on the first device with the second device, the user can obtain the second network distribution information through the terminal and use the second network distribution information to perform network distribution on the first device.

Specifically, after the user sends the device information to the server through the terminal, the server sends the device information to the second device, the second device finds the first device via the device information, and the second device performs network distribution on the first device with the first network distribution information. In an event of successful network distribution, the server can send the second network distribution success information to the terminal to prompt the user to complete the network distribution on the first device. Therefore, when the terminal does not receive the second network distribution success information from the server within the first time period, it is determined that the first device cannot be network-distributed by the second device, and the terminal then distributes network to the first device using the obtained second network distribution information.

For example, the second network distribution information may be network distribution information of the terminal. In a case where the terminal is connected to a WIFI (wireless network communication technology) network, the information of the WIFI to which the terminal is connected can be taken as the second network distribution information and sent to the first device to complete the network distribution of the first device.

For example, the second network distribution information may be network distribution information entered by the user terminal.

In the embodiments of the present disclosure, in an event that the first device cannot be network-distributed by the second device, the terminal can obtain the corresponding second network distribution information and complete the network distribution of the first device with the second network distribution information, thereby avoiding the need for the user to manually perform network distribution on the first device when the second device cannot perform network distribution on the first device, and further ensuring the convenience of network distribution of the first device.

In any of the above embodiments, when the first device is in not network-distributed, the obtaining device information of the first device includes: scanning an identification code through the terminal to obtain the device information, where the identification code corresponds to the first device.

In the embodiments, the first device is network-distributed through the terminal by scanning code, and the scanning process can obtain the device information of the first device. The device information of the first device is sent to the server through the terminal, which realizes the authorization to the first device before the first device is network-distributed.

The identification code corresponds to the first device in a one-to-one correspondence, that is, the terminal scans the identification code to obtain the device information corresponding to the first device.

For example, the identification code may be a QR code, a barcode, etc.

Specifically, after the terminal scans the identification code corresponding to the first device, the terminal sends the device information to the server, which can obtain the account information logged in by the terminal, and bind the account information to the device information to complete the authorization of the first device. The server further sends the device information to the second device, which completes the network distribution to the first device through the second device, such that the user can complete the network distribution and authorization of the first device with only one scan, thereby further simplifying the user's operating steps.

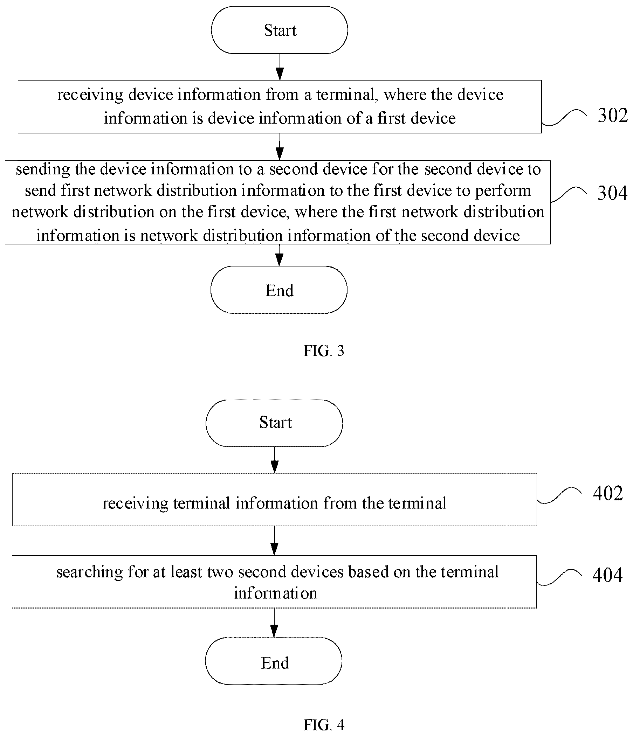

According to some embodiments of the present disclosure, as shown in FIG. 3, a network distribution method is proposed, which is performed by a server. The network distribution method includes operations at blocks illustrated herein.

At block 302: receiving device information from a terminal, where the device information is device information of a first device.

At block 304: sending the device information to a second device for the second device to send first network distribution information to the first device to perform network distribution on the first device, where the first network distribution information is network distribution information of the second device.

The present disclosure defines a network distribution method for household devices, which is performed by a server. After the user scans the first device that has not been network-distributed through the terminal and obtains the device information of the first device, the server can receive the device information of the first device sent by the terminal, and the server forwards the device information to the second device that has been network-distributed. Since the second device is in communication connection with the first device, the first network distribution information of the first device is sent to the first device through the second device to complete the network distribution of the first device, without the need for the user to manually enter network distribution information, thereby simplifying the process for the user to perform network distribution on the first device. Moreover, based on the device information of the first device, the second device can accurately locate the first device to which the network is required to be distributed, and accurately send the first network distribution information to the first device, thereby avoiding misdistribution of other devices.

Specifically, the first device is in communication connection with the second device, and the second device sends its own first network distribution information to the first device. The first device can complete the network distribution based on the first network distribution information. The first device is in a state of waiting to be network-distributed, so as to ensure that the second device can establish a communication connection with the first device.

For example, the first device may be connected to the second device via near-field communication, for example, the first device and the second device are connected via Bluetooth.

In the present embodiments, when the user obtains the device information of the first device through the terminal and sends the device information to the server, the server can automatically obtain an authentication information of the login account of the terminal, and accordingly find the second device. During the network distribution process to the terminal through the first network distribution of the second device, the authorization process can be automatically completed, without the need for the user to re-authorize the first device to which the network has been distributed, thereby further simplifying the user's operating process.

In the present embodiments of the present disclosure, the server receives the device information of the first device sent by the terminal, and the server forwards the device information to the second device that has been network-distributed. The second device can establish a communication connection with the first device based on the device information, and send its own first network distribution information to the first device to perform network distribution on the first device, thereby eliminating the need for the user to manually distribute network for the first device. The second device can accurately locate the first device required to be network-distributed based on the device information of the first device, and accurately send the first network distribution information to the first device, thereby avoiding mis-distributing network for other devices.

In the above embodiments, the number of device information may be at least two; the sending the device information to a second device includes: sending the information of the at least two devices to the second device.

The embodiments provide a specific process by the server for distributing network to multiple first devices that are not network-distributed.

Specifically, in a situation where the user needs to distribute network to multiple first devices, the device information of the multiple first devices is transmitted to the server through the terminal. Upon receiving the device information, the server can directly send the device information to the second device. The terminal and the server perform the process of distributing network to the first device to achieve the network distribution to multiple first devices.

For example, a microwave oven, an air conditioner, and a washing machine in a home system are first devices that are not network-distributed, and a vacuum cleaner is a second device that is already network-distributed. The server sends the corresponding device information of the microwave oven, the air conditioner, and the washing machine to the vacuum cleaner, such that the vacuum cleaner can send the first network distribution information to the microwave oven, the air conditioner, and the washing machine respectively to complete the network distribution for the microwave oven, the air conditioner, and the washing machine. The server can send the microwave oven, the air conditioner, and the washing machine to the vacuum cleaner in a predetermined order.

In the embodiments of the present disclosure, during the network distribution process to the multiple first devices that are not network-distributed, the user can use the terminal to send the device information corresponding to the multiple first devices to the server at one time to distribute network to the multiple first devices in batches, such that the user does not need to wait for the network distribution to the previous first device before distributing network to another first device, thereby further simplifying the user's operating process.

In any of the above embodiments, the information of the at least two devices includes a first device information and a second device information;
the sending the information of the at least two devices to the second device includes:
in a case of receiving the first device information from the terminal, sending the first device information to the second device for the second device to send the first network distribution information to the first device corresponding to the first device information;
in a case of receiving a first network distribution success information from the first device corresponding to the first device information, sending the first network distribution success information to the terminal;
in a case of receiving the second device information from the terminal, sending the second device information to the second device for the second device to send the first network distribution information to the first device corresponding to the second device information.

In the embodiments, the terminal sends the device information of multiple first devices to the server, and the server sends the first device information included in the multiple device information to the second device. After the second device completes the network distribution for the first device corresponding to the first device information, the second device sends a first network distribution success information back to the server. After the server sends the first network distribution information to the terminal, the terminal continues to send the second device information included in the multiple device information to the server to continue the network distribution for the first device corresponding to the second device information.

In the embodiments of the present disclosure, the terminal sends the device information of multiple first devices to the server in batches, and only when the first device of the previous batch has been successfully network-distributed, the terminal continues to send the device information of the remaining first devices, thereby improving the success rate of network distribution after the terminal has sent the device information and avoiding a large number of invalid actions of the terminal sending the device information. As shown in FIG. 4, in any of the above embodiments, before the receiving device information from a terminal, the method further includes operation at blocks illustrated herein.

At block 402: receiving a terminal information from the terminal.

At block 404: searching for at least two second devices based on the terminal information.

The sending the device information to a second device includes:
sending the device information to the at least two second devices in a case of receiving the device information.

In the embodiments, the server is required to find a second device that is already network-distributed and matches the terminal, and after finding the second device, send the device information of the first device to the second device.

Specifically, the terminal is bound to the second device in the network-distributed state, and after receiving the terminal information, the server can find the second device bound to the terminal through the terminal information. It should be noted that the number of second devices to be bound to the terminal information may be one or more.

For example, the IoT account logged in by the terminal is bound to the second device, and the server can find the second device bound to the terminal through the IoT account information logged in by the terminal. That is, the terminal and the second device are bound under the same IoT account. The server searches for device in the network-distributed state under the same IoT account, and takes the device as the second device.

In the embodiments of the present disclosure, after the terminal establishes a communication connection with the server, the terminal sends the terminal information to the server, and the server can find the second device bound to the terminal information according to the terminal information, such that the server can subsequently transmit the device information of the first device to the second device, thereby ensuring that the second device that has been network-distributed is a device bound to the terminal, and avoiding network distribution failures caused by network distribution of the first device through other devices.

In any of the above embodiments, after the receiving device information from a terminal, the method further includes: in a case where a duration since the device information is received reaches a second duration, deleting the device information, and sending a first prompt information to the terminal to prompt the terminal to obtain the device information again.

In the embodiments, the validity duration of the device information of the first device is the second duration. After the server receives the device information and the device information is received for a period exceeding the second duration, the server deletes the device information stored in the server and prompts the user to obtain the device information of the first device again via the first prompt information.

Specifically, the server sets a valid second duration for each first device, which starts counting after the server receives the device information. When the duration reaches the second duration, the corresponding device information in the server is deleted and the user is prompted to obtain the device information for the first device again through the terminal.

For example, the second duration is 30 minutes, and the user sends the device information of the first device to the server by scanning a code. The server will send the first prompt information to the terminal to scan the code again 30 minutes after receiving the device information.

In the embodiments of the present disclosure, the server can time the validity period, and after the device information has reached the validity period, delete the device information to avoid repeatedly distributing network for the first device corresponding to the device information. In an event that the server is required to distribute network to multiple first devices via the second device, this design may avoid the device information of the device that cannot be network-distributed clogging the network distribution process and thus improve the efficiency of network distribution to multiple first devices.

In any of the above embodiments, after the sending the device information to a second device, the method further includes: in a case of receiving third network distribution success information, binding the device information to the terminal.

In the embodiments, after the server receives the third network distribution success information indicating that the first device has been successfully network-distributed by the second device, it is determined that the second device has successfully network-distributed the first device, and the authentication of the first device is completed by binding the device information of the first device to the terminal.

For example, the third network distribution success information is sent to the server by the first device that has been successfully network-distributed.

For example, the third network distribution success information is sent to the server by the second device that has successfully distributed the network for the first device.

For example, the terminal is logged in with an account information in the server, and the server completes the authentication by binding the account information to the device information of the first device that has been successfully network-distributed.

For example, the server records a device identifier of the terminal, and the server completes the authentication by binding the device identifier of the terminal to the device information of the first device that has been successfully network-distributed.

In the embodiments of the present disclosure, the server can bind the device information of the first device to the terminal after the first device has been successfully network-distributed, thereby completing the authentication of the first device and ensuring that the user can control the first device through the terminal.

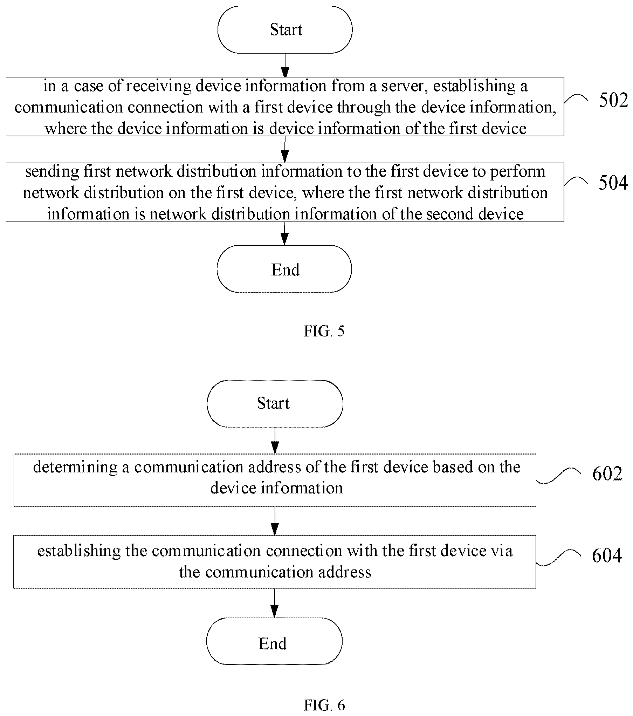

According to some embodiments of the present disclosure, as shown in FIG. 5, a network distribution method is proposed, which is performed by a second device. The network distribution method includes operations at blocks illustrated herein.

At block 502: in a case of receiving device information from a server, establishing a communication connection with a first device through the device information, where the device information is device information of the first device.

At block 504: sending first network distribution information to the first device to perform network distribution on the first device, where the first network distribution information is network distribution information of the second device.

The present disclosure defines a network distribution method for household devices, which is performed by a second device. After the user scans the first device that has not been network-distributed through the terminal and obtains the device information of the first device, the server can receive the device information of the first device sent by the terminal, and the server forwards the device information to the second device that has been network-distributed. Since the second device is in communication connection with the first device, after the second device receives the device information of the first device, the second device sends its own first network distribution information to the first device to complete the network distribution of the first device, without the need for the user to manually enter network distribution information, thereby simplifying the process for the user to perform network distribution on the first device. Moreover, based on the device information of the first device, the second device can accurately locate the first device to which the network is required to be distributed, and accurately send the first network distribution information to the first device, thereby avoiding misdistribution of other devices.

Specifically, the first device is in communication connection with the second device, and the second device sends its own first network distribution information to the first device. The first device can complete the network distribution based on the first network distribution information. The first device is in a state of waiting to be network-distributed, so as to ensure that the second device can establish a communication connection with the first device.

For example, the first device may be connected to the second device via near-field communication, for example, the first device and the second device are connected via Bluetooth.

In the present embodiments, when the user obtains the device information of the first device through the terminal and sends the device information to the server, the server can automatically obtain an authentication information of the login account of the terminal, and accordingly find the second device. During the network distribution process to the terminal through the first network distribution of the second device, the authorization process can be automatically completed, without the need for the user to re-authorize the first device to which the network has been distributed, thereby further simplifying the user's operating process.

In the present embodiments of the present disclosure, the server receives the device information of the first device sent by the terminal, and the server forwards the device information to the second device that has been network-distributed. The second device can establish a communication connection with the first device based on the device information, and send its own first network distribution information to the first device to perform network distribution on the first device, thereby eliminating the need for the user to manually distribute network for the first device. The second device can accurately locate the first device required to be network-distributed based on the device information of the first device, and accurately send the first network distribution information to the first device, thereby avoiding mis-distributing network for other devices.

As shown in FIG. 6, in the above embodiments, the in a case of receiving device information from a server, establishing a communication connection with a first device through the device information includes operations at blocks illustrated herein.

At block 602: determining a communication address of the first device based on the device information.

At block 604: establishing the communication connection with the first device via the communication address.

In the embodiments, the second device can obtain the communication address corresponding to the first device through the device information, and establish a communication connection between the second device and the first device based on the communication address, so as to ensure that the second device can subsequently send second network distribution information to the first device.

For example, the second device can obtain the Bluetooth address of the first device through the device information of the first device, and establish a Bluetooth connection with the first device through the obtained Bluetooth address. The second device can send the first network distribution information to the first device through the Bluetooth channel, thereby realizing the network distribution of the first device through the second device.

It should be noted that device information includes at least one of the following: an identification information, a model information, and a communication address information. By defining device information to include at least one of the model information, the identification information, and the communication address information of the first device, it is ensured that after the second device receives the device information of the first device sent by the server, the second device can quickly find the first device through the device information and perform network distribution on the first device.

In the embodiments of the present disclosure, the second device can obtain the corresponding communication address of the first device that has not been network-distributed through the device information of the first device, and establish a communication connection with the first device accordingly, such that the second device can send the first network distribution information to the first device to complete the network distribution of the first device.

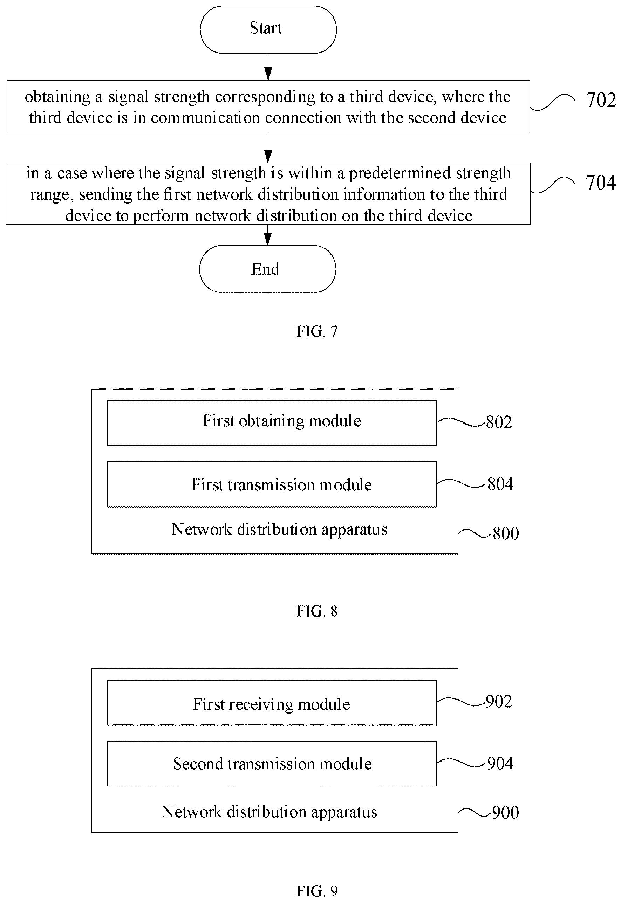

As shown in FIG. 7, in any of the above embodiments, after the sending first network distribution information to the first device, the method further includes operations at blocks illustrated herein.

At block 702: obtaining a signal strength corresponding to a third device, where the third device is in communication connection with the second device.

At block 704: in a case where the signal strength is within a predetermined strength range, sending the first network distribution information to the third device to perform network distribution on the third device.

In the embodiments, after the second device has completed network distribution for the first device, the second device actively performs network distribution on a third device that is not network-distributed.

Specifically, the second device communicates with multiple third devices that have not been network-distributed. After the second device completes network distribution on the first device, the second device can detect the signal strength of each third device. When the signal strength is within a predetermined strength range, he second device automatically performs network distribution on the third device. That is, the first network distribution information is sent to the third device with its signal strength within the predetermined strength range, and network distribution of the third device is completed.

For example, the second device is arranged with a physical button switch. After the second device has completed the network distribution to the first device, the user can turn on the function of spontaneously distributing network to the third device through the physical button switch.

In the embodiments of the present disclosure, after the second device completes the network distribution for the first device, the second device can spontaneously search for the third device in the un-network-distributed state, and distribute network to the third device with the first network distribution information of the second device, thereby achieving the effect of the second device spontaneously completing the network distribution for devices that are not network-distributed, and thus further improving the convenience of network distribution.

In any of the above embodiments, after the in a case where the signal strength is within a predetermined strength range, sending the first network distribution information to the third device to perform network distribution on the third device, the method further includes: sending a second prompt information to a terminal to prompt the user to perform authorization on the third device through the terminal, where the terminal is matched with the second device.

In the embodiments, after the second device spontaneously distributes network to the third device, the second device sends a second prompt information to prompt the user to perform authorization on the third device, thereby prompting the user to perform authorization on the third device that has been distributed to the network through the terminal.

Specifically, after the second device sends the first network distribution information to the third device, the second device sends the second prompt information to the terminal to prompt the user to connect the third device to the network. After the terminal receives the second prompt information, the user can use the terminal to scan a QR code on the third device to complete the authorization to the third device and bind the third device to the account information logged in by the terminal.

For example, the second prompt information includes device information of the third device, such that the user can view the relevant information of the newly connected third device through the terminal.

In the embodiments of the present disclosure, after the second device has spontaneously completed the network distribution to the third device, the second device can send the second prompt information to the terminal to prompt the user, so as to prevent the user from forgetting to confirm the authority of the third device to which the network distribution has been completed.

In some embodiments of the present disclosure, as shown in FIG. 8, a network distribution apparatus 800 is proposed for use in a terminal. The network distribution apparatus 800 includes:
a first obtaining module 802, configured to obtain device information of a first device while the first device is not network-distributed.
a first transmission module 804, configured to send the device information to a server for the server to send the device information to a second device, for causing the second device to send first network distribution information to the first device to perform network distribution on the first device; where the first network distribution information is network distribution information of the second device.

The present disclosure defines a network distribution apparatus for household devices, which is applied to a terminal. After the terminal obtains the device information of the first device, the terminal sends the device information to the server for the server to forward the device information to the second device that has been network-distributed. Since the second device is in communication connection with the first device, the first network distribution information of the first device is sent to the first device through the second device to complete the network distribution of the first device, without the need for the user to manually enter network distribution information, thereby simplifying the process for the user to perform network distribution on the first device. Moreover, based on the device information of the first device, the second device can accurately locate the first device to which the network is required to be distributed, and accurately send the first network distribution information to the first device, thereby avoiding misdistribution of other devices.

In the technical solution of the present disclosure, the device information of the first device is uploaded to the server through the terminal, and the server forwards the device information to the second device that has been network-distributed, such that the second device can establish a communication connection with the first device based on the device information, and send its own first network distribution information to the first device to perform network distribution on the first device, thereby eliminating the need for the user to manually perform network distribution on the first device, and thus simplifying the operational process required to perform network distribution on the first device.

In the above embodiments, the number of first devices may be at least two; the first transmission module 804 is configured to send the information of the at least two devices to the server, for the sever to send the information of the at least two devices to the second device.

The embodiments provide a specific process for distributing network to multiple first devices that are not network-distributed.

Specifically, in a situation where the user needs to distribute network to multiple first devices, the device information of the multiple first devices is transmitted to the server through the terminal. Upon receiving the device information, the server can directly send the device information to the second device. The terminal and the server perform the process of distributing network to the first device to achieve the network distribution to multiple first devices.

In the embodiments of the present disclosure, during the network distribution process to the multiple first devices that are not network-distributed, the user can use the terminal to send the device information corresponding to the multiple first devices to the server at one time to distribute network to the multiple first devices in batches, such that the user does not need to wait for the network distribution to the previous first device before distributing network to another first device, thereby further simplifying the user's operating process.

In any of the above embodiments, the first transmission module 804 is configured to send a first device information included in the information of the at least two devices to the server for the server to send the first device information to the second device, where the first device information is device information filtered based on an acquisition time included in the information of the at least two devices; and

in a case of receiving a first network distribution success information from the server, sending a second device information included in the information of the at least two devices to the server for the server to send the second device information to the second device, where the second device information includes device information other than the first device information included in the information of the at least two devices.

In the embodiments, the terminal sends the device information of multiple first devices to the server, and the server sends the first device information included in the multiple device information to the second device. After the second device completes the network distribution for the first device corresponding to the first device information, the second device sends a first network distribution success information back to the server. After the server sends the first network distribution information to the terminal, the terminal continues to send the second device information included in the multiple device information to the server to continue the network distribution for the first device corresponding to the second device information.

In the embodiments of the present disclosure, the terminal sends the device information of multiple first devices to the server in batches, and only when the first device of the previous batch has been successfully network-distributed, the terminal continues to send the device information of the remaining first devices, thereby improving the success rate of network distribution after the terminal has sent the device information and avoiding a large number of invalid actions of the terminal sending the device information.

In any of the above embodiments, the device information includes at least one of the following: an identification information, a model information, and a communication address information.

In the embodiments, it is defined that the device information of the first device includes at least one of the identification information, the model information, and the communication address information.

Specifically, by defining the device information, it is ensured that the second device in the network-distributed state can find the corresponding first device through the device information and perform network distribution on the first device.

In the embodiments of the present disclosure, by defining the device information to include at least one of the model information, the identification information, and the communication address information of the first device, it is ensured that the second device can quickly find the first device through the device information after receiving the device information of the first device sent by the server, and perform network distribution on the first device.

In any of the above embodiments, the first transmission module 804 is configured to send a terminal information of the terminal to the server, for the server to search for at least two second devices based on the terminal information, for causing the server to send the device information to the at least two second devices in a case of receiving the device information.

In the embodiments, before the terminal sends the device information of the first device to the server, the server needs to find a network-distributed second device that matches the terminal, and after the second device is found, the device information of the first device is sent to the second device.

Specifically, the terminal is bound to the second device in the network-distributed state, and after receiving the terminal information, the server can find the second device bound to the terminal through the terminal information. It should be noted that the number of second devices to be bound to the terminal information may be one or more.

In the embodiments of the present disclosure, after the terminal establishes a communication connection with the server, the terminal sends the terminal information to the server, and the server can find the second device bound to the terminal information according to the terminal information, such that the server can subsequently transmit the device information of the first device to the second device, thereby ensuring that the second device that has been network-distributed is a device bound to the terminal, and avoiding network distribution failures caused by network distribution of the first device through other devices.

In any of the above embodiments, the first obtaining module 802 is configured to obtain second network distribution information in a case of not receiving second network distribution success information within a first time period.

The network distribution apparatus 800 includes:
a network distribution module, configured to perform network distribution on the first device with the second network distribution information.

In the embodiments, in the event of a failure to perform network distribution on the first device with the second device, the user can obtain the second network distribution information through the terminal and use the second network distribution information to perform network distribution on the first device.

Specifically, after the user sends the device information to the server through the terminal, the server sends the device information to the second device, the second device finds the first device via the device information, and the second device performs network distribution on the first device with the first network distribution information. In an event of successful network distribution, the server can send the second network distribution success information to the terminal to prompt the user to complete the network distribution on the first device. Therefore, when the terminal does not receive the second network distribution success information from the server within the first time period, it is determined that the first device cannot be network-distributed by the second device, and the terminal then distributes network to the first device using the obtained second network distribution information.

In the embodiments of the present disclosure, in an event that the first device cannot be network-distributed by the second device, the terminal can obtain the corresponding second network distribution information and complete the network distribution of the first device with the second network distribution information, thereby avoiding the need for the user to manually perform network distribution on the first device when the second device cannot perform network distribution on the first device, and further ensuring the convenience of network distribution of the first device.

In any of the above embodiments, the network distribution apparatus 800 includes:
a scanning module, configured to scan an identification code through the terminal to obtain the device information, where the identification code corresponds to the first device.

In the embodiments, the first device is network-distributed through the terminal by scanning code, and the scanning process can obtain the device information of the first device. The device information of the first device is sent to the server through the terminal, which realizes the authorization to the first device before the first device is network-distributed.

Specifically, after the terminal scans the identification code corresponding to the first device, it sends the device information to the server, which can obtain the account information logged in by the terminal and bind the account information to the device information to complete the authorization for the first device. The server will also send the device information to the second device, which completes the network distribution for the first device through the second device, such that the user can complete the network distribution and authorization for the first device with only one scan operation, further simplifying the user's operating steps.

In some embodiments of the present disclosure, as shown in FIG. 9, a network distribution apparatus 900 is proposed, which is applied to a server. The network distribution apparatus 900 includes:
a first receiving module 902, configured to receive device information from a terminal, where the device information is device information of a first device.
a second transmission module 904, configured to send the device information to a second device for the second device to send first network distribution information to the first device to perform network distribution on the first device, where the first network distribution information is network distribution information of the second device.

The present disclosure defines a network distribution apparatus for household devices, which is applied to a server. After the user scans the first device that has not been network-distributed through the terminal and obtains the device information of the first device, the server can receive the device information of the first device sent by the terminal, and the server forwards the device information to the second device that has been network-distributed. Since the second device is in communication connection with the first device, the first network distribution information of the first device is sent to the first device through the second device to complete the network distribution of the first device, without the need for the user to manually enter network distribution information, thereby simplifying the process for the user to perform network distribution on the first device. Moreover, based on the device information of the first device, the second device can accurately locate the first device to which the network is required to be distributed, and accurately send the first network distribution information to the first device, thereby avoiding misdistribution of other devices.

In the present embodiments of the present disclosure, the server receives the device information of the first device sent by the terminal, and the server forwards the device information to the second device that has been network-distributed. The second device can establish a communication connection with the first device based on the device information, and send its own first network distribution information to the first device to perform network distribution on the first device, thereby eliminating the need for the user to manually distribute network for the first device. The second device can accurately locate the first device required to be network-distributed based on the device information of the first device, and accurately send the first network distribution information to the first device, thereby avoiding mis-distributing network for other devices.

In the above embodiments, the number of device information may be at least two;

the second transmission module 904 is configured to send the information of the at least two devices to the second device.

The embodiments provide a specific process by the server for distributing network to multiple first devices that are not network-distributed.

In the embodiments of the present disclosure, during the network distribution process to the multiple first devices that are not network-distributed, the user can use the terminal to send the device information corresponding to the multiple first devices to the server at one time to distribute network to the multiple first devices in batches, such that the user does not need to wait for the network distribution to the previous first device before distributing network to another first device, thereby further simplifying the user's operating process.

In any of the above embodiments, the information of the at least two devices includes a first device information and a second device information;

the second transmission module 904 is configured to, in a case of receiving the first device information from the terminal, send the first device information to the second device for the second device to send the first network distribution information to the first device corresponding to the first device information;
the second transmission module 904 is configured to, in a case of receiving the second device information from the terminal, send the second device information to the second device for the second device to send the first network distribution information to the first device corresponding to the second device information.
the second transmission module 904 is configured to, in a case of receiving the second device information from the terminal, send the second device information to the second device for the second device to send the first network distribution information to the first device corresponding to the second device information.

In the embodiments, the terminal sends the device information of multiple first devices to the server, and the server sends the first device information included in the multiple device information to the second device. After the second device completes the network distribution for the first device corresponding to the first device information, the second device sends a first network distribution success information back to the server. After the server sends the first network distribution information to the terminal, the terminal continues to send the second device information included in the multiple device information to the server to continue the network distribution for the first device corresponding to the second device information.

In the embodiments of the present disclosure, the terminal sends the device information of multiple first devices to the server in batches, and only when the first device of the previous batch has been successfully network-distributed, the terminal continues to send the device information of the remaining first devices, thereby improving the success rate of network distribution after the terminal has sent the device information and avoiding a large number of invalid actions of the terminal sending the device information.

In any of the above embodiments, the first receiving module 902 is configured to receive a terminal information from the terminal;
the network distribution apparatus 900 further includes:
a searching module, configured to search for at least two second devices based on the terminal information

The second transmission module 904 is configured to send the device information to the at least two second devices in a case of receiving the device information.

In the embodiments, the server is required to find a second device that is already network-distributed and matches the terminal, and after finding the second device, send the device information of the first device to the second device.

In the embodiments of the present disclosure, after the terminal establishes a communication connection with the server, the terminal sends the terminal information to the server, and the server can find the second device bound to the terminal information according to the terminal information, such that the server can subsequently transmit the device information of the first device to the second device, thereby ensuring that the second device that has been network-distributed is a device bound to the terminal, and avoiding network distribution failures caused by network distribution of the first device through other devices.

In any of the above embodiments, the network distribution apparatus 900 further includes:
a processing module, configured to, in a case where a duration since the device information is received reaches a second duration, delete the device information and send a first prompt information to the terminal to prompt the terminal to obtain the device information again.

In the embodiments, the validity duration of the device information of the first device is the second duration. After the server receives the device information and the device information is received for a period exceeding the second duration, the server deletes the device information stored in the server and prompts the user to obtain the device information of the first device again via the first prompt information.

In the embodiments of the present disclosure, the server can time the validity period, and after the device information has reached the validity period, delete the device information to avoid repeatedly distributing network for the first device corresponding to the device information. In an event that the server is required to distribute network to multiple first devices via the second device, this design may avoid the device information of the device that cannot be network-distributed clogging the network distribution process and thus improve the efficiency of network distribution to multiple first devices.

In any of the above embodiments, the network distribution apparatus 900 further includes:
a binding module, configured to, in a case of receiving third network distribution success information, bind the device information to the terminal.

In the embodiments, after the server receives the third network distribution success information indicating that the first device has been successfully network-distributed by the second device, it is determined that the second device has successfully network-distributed the first device, and the authentication of the first device is completed by binding the device information of the first device to the terminal.

In the embodiments of the present disclosure, the server can bind the device information of the first device to the terminal after the first device has been successfully network-distributed, thereby completing the authentication of the first device and ensuring that the user can control the first device through the terminal.

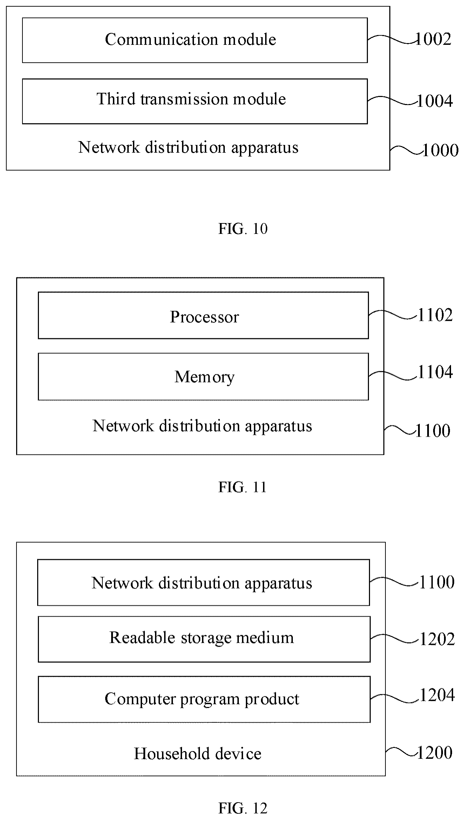

In some embodiments of the present disclosure, as shown in FIG. 10, a network distribution apparatus 1000 is proposed, which is applied to a second device. The network distribution apparatus 1000 includes:
a communication module 1002, configured to, in a case of receiving device information from a server, establish a communication connection with a first device through the device information, where the device information is device information of the first device; and
a third transmission module 1004, configured to send first network distribution information to the first device to perform network distribution on the first device, where the first network distribution information is network distribution information of the second device.

The present disclosure defines a network distribution apparatus for household devices, which is applied to a second device. After the user scans the first device that has not been network-distributed through the terminal and obtains the device information of the first device, the server can receive the device information of the first device sent by the terminal, and the server forwards the device information to the second device that has been network-distributed. Since the second device is in communication connection with the first device, after the second device receives the device information of the first device, the second device sends its own first network distribution information to the first device to complete the network distribution of the first device.

In the present embodiments of the present disclosure, the server receives the device information of the first device sent by the terminal, and the server forwards the device information to the second device that has been network-distributed. The second device can establish a communication connection with the first device based on the device information, and send its own first network distribution information to the first device to perform network distribution on the first device, without the need for the user to manually enter network distribution information, thereby simplifying the process for the user to perform network distribution on the first device. Moreover, based on the device information of the first device, the second device can accurately locate the first device to which the network is required to be distributed, and accurately send the first network distribution information to the first device, thereby avoiding misdistribution of other devices.

In the embodiments, the network distribution apparatus 1000 includes:
a determination module, configured to determine a communication address of the first device based on the device information.

The communication module 1002 is configured to establish the communication connection with the first device via the communication address.

In the embodiments, the second device can obtain the communication address corresponding to the first device through the device information, and establish a communication connection between the second device and the first device based on the communication address, so as to ensure that the second device can subsequently send second network distribution information to the first device.

In the embodiments of the present disclosure, the second device can obtain the corresponding communication address of the first device that has not been network-distributed through the device information of the first device, and establish a communication connection with the first device accordingly, such that the second device can send the first network distribution information to the first device to complete the network distribution of the first device.

In any of the above embodiments, the network distribution apparatus 1000 includes:
a second obtaining module, configured to obtain a signal strength corresponding to a third device, where the third device is in communication connection with the second device.

The third transmission module 1004 is configured to, in a case where the signal strength is within a predetermined strength range, send the first network distribution information to the third device to perform network distribution on the third device.

In the embodiments, after the second device has completed network distribution for the first device, the second device actively performs network distribution on a third device that is not network-distributed.

In the embodiments of the present disclosure, after the second device completes the network distribution for the first device, the second device can spontaneously search for the third device in the un-network-distributed state, and distribute network to the third device with the first network distribution information of the second device, thereby achieving the effect of the second device spontaneously completing the network distribution for devices that are not network-distributed, and thus further improving the convenience of network distribution.

In any of the above embodiments, the third transmission module 1004 is configured to send a second prompt information to the terminal to prompt the user to perform authorization on the third device through the terminal, where the terminal is matched with the second device.

In the embodiments, after the second device spontaneously distributes network to the third device, the second device sends a second prompt information to prompt the user to perform authorization on the third device, thereby prompting the user to perform authorization on the third device that has been distributed to the network through the terminal.

n the embodiments of the present disclosure, after the second device has spontaneously completed the network distribution to the third device, the second device can send the second prompt information to the terminal to prompt the user, so as to prevent the user from forgetting to confirm the authority of the third device to which the network distribution has been completed.

As shown in FIG. 11, according to a fourth aspect of the present disclosure, a network distribution apparatus 1100 is provided, including: a processor 1102 and a memory 1104; where the memory 1104 stores a program or instructions; the processor 1102 executes the program or instructions stored in the memory 1104 to achieve the steps of the network distribution method in any of the above embodiments, and therefore has all the beneficial technical effects of the network distribution method in any of the above embodiments, which will not be described in detail herein.

In some embodiments of the present disclosure, a readable storage medium is provided, where the readable storage medium stores a program or instructions, and the program or instructions, when executed by a processor, implements the steps of the network distribution method of any of the above embodiments. Therefore, the readable storage medium has all the beneficial technical effects of the network distribution method in any of the above embodiments, which will not be described in detail herein.

In some embodiments of the present disclosure, a computer program product is provided, where the computer program product stores a program or instructions, and the program or instructions, when executed by a processor, implement the steps of the network distribution method in any of the above embodiments. Therefore, the computer program product has all the beneficial technical effects of the network distribution method in any of the above embodiments, which will not be described in detail herein.

In some embodiments of the present disclosure, as shown in FIG. 12, a household device 1200 is provided, including: a network distribution apparatus 1100 as in the above embodiments; and/or a readable storage medium 1202 as defined in the above embodiments; and/or a computer program product 1204, thus having all the beneficial technical effects of the network distribution apparatus 1100 of the above embodiments, which will not be described in detail herein.

For example, the household device 1200 may be a refrigerator, a washing machine, a water heater, a television, a vacuum cleaner, etc.

The methods described may be implemented in various ways depending on the specific features and/or example applications. For example, the methods may be implemented by a combination of hardware, firmware, and/or software. For example, in a hardware implementation, the processor may be implemented in one or more application-specific integrated circuits (ASICs), digital signal processors (DSPs), digital signal processing devices (DSPDs), programmable logic devices (PLDs), field-programmable gate arrays (FPGAs), controllers, microcontrollers, microprocessors, electronic devices, other device units for performing the above functions, and/or a combination thereof.

The computer-readable storage medium may be a tangible device that holds and stores instructions for use by an instruction execution device. The computer-readable storage medium may be, but is not limited to, an electronic storage device, magnetic storage device, optical storage device, electromagnetic storage device, or a semiconductor storage device, or any suitable combination thereof. A more specific example of a non-exhaustive list of the computer-readable storage medium includes: portable computer diskettes, hard disks, random access memory (RAM), read-only memory (ROM), erasable programmable read-only memory (EPROM or flash memory), static random access memory (SRAM), portable compact disc read-only memory (CD-ROM), digital versatile discs (DVD), memory cards, floppy disks, encoded mechanical devices (such as punched cards or notches with raised structures recording instructions), and any suitable combination of the above devices. The computer-readable storage medium used herein is not to be understood as a transmission signal itself, such as radio waves or other freely propagating electromagnetic waves, electromagnetic waves propagating via waveguides or other transmission media, or electrical signals transmitted via wires.

It should be noted that in the claims, description, and drawings of the present disclosure, the term "more than one" refers to two or more, and unless otherwise expressly defined, the terms "top", "bottom" and other orientation or position relationships indicate the orientation or position relationship shown in the drawings, which are provided for the convenience of describing the present disclosure and facilitating the description process, and are not intended to indicate or imply that the referred device or element must have the specific orientation described, constructed and operated in the specific orientation, and therefore these descriptions cannot be understood as a limitation of the present disclosure. The terms "connect," "install," "fix," etc. should be understood broadly. For example, "connect" may be a fixed connection between multiple objects, a detachable connection between multiple objects, or a connection in one piece; a direct connection between multiple objects, or an indirect connection between multiple objects through an intermediate medium. For those skilled in the art, the specific meaning of the above terms in the present disclosure can be understood based on the specific circumstances of the above data.

In the claims, description, and drawings of the present disclosure, the terms "an embodiment," "some embodiments," "specific embodiments," etc. are used to describe embodiments or examples of the present disclosure that include specific features, structures, materials, or characteristics in combination with the embodiments or examples described. The illustrative representations of the above terms in the claims, description, and drawings of the present disclosure do not necessarily refer to the same embodiment or example. Moreover, the specific features, structures, materials, or characteristics described may be combined in any suitable manner in one or more embodiments or examples.

The above is only some embodiments of the present disclosure, and is not intended to limit the present disclosure, which may have various modifications and changes for those skilled in the art. Any modifications, equivalent replacements, improvements, etc., made within the spirit and principles of the present disclosure shall be included in the scope of the present disclosure.

## Claims

1. A network distribution method, performed by a terminal and comprising:
while a first device is not network-distributed, obtaining device information of the first device; and
sending the device information to a server for the server to send the device information to a second device, for causing the second device to send first network distribution information to the first device to perform network distribution on the first device; wherein the first network distribution information is network distribution information of the second device.

2. The method according to claim 1, wherein the first device comprises at least two first devices;
the sending the device information to a server comprises:
sending the information of the at least two devices to the server, for the sever to send the information of the at least two devices to the second device.

3. The method according to claim 2, wherein the sending the information of the at least two devices to the server comprises:
sending a first device information included in the information of the at least two devices to the server for the server to send the first device information to the second device, wherein the first device information is device information filtered based on an acquisition time included in the information of the at least two devices; and
in a case of receiving a first network distribution success information from the server, sending a second device information included in the information of the at least two devices to the server for the server to send the second device information to the second device, wherein the second device information comprises device information other than the first device information included in the information of the at least two devices.

4. The method according to any one of claims 1-3, wherein before sending the device information to the server, the method further comprises:
sending a terminal information of the terminal to the server, for the server to search for the at least two second devices based on the terminal information, for causing the server to send the device information to the at least two second devices in a case of receiving the device information.

5. The method according to any one of claims 1-4, wherein after the sending the device information to a server, the method further comprises:
in a case of not receiving second network distribution success information within a first time period, obtaining second network distribution information; and
performing network distribution on the first device with the second network distribution information.

6. The method according to any one of claims 1-5, wherein the while a first device is not network-distributed, obtaining device information of the first device comprises:
scanning an identification code through the terminal to obtain the device information, wherein the identification code corresponds to the first device.

7. A network distribution method, performed by a server and comprising:
receiving device information from a terminal, wherein the device information is device information of a first device; and
sending the device information to a second device for the second device to send first network distribution information to the first device to perform network distribution on the first device, wherein the first network distribution information is network distribution information of the second device.

8. The method according to claim 7, wherein the first device comprises at least two first devices;
the sending the device information to a second device comprises:
sending information of the at least two devices of the at least two first devices to the second device.

9. The method according to claim 8, wherein the information of the at least two devices comprises a first device information and a second device information;
the sending information of the at least two devices of the at least two first devices to the second device comprises:
in a case of receiving the first device information from the terminal, sending the first device information to the second device for the second device to send the first network distribution information to a first device corresponding to the first device information included in the at least two first devices;
in a case of receiving a first network distribution success information from the first device corresponding to the first device information, sending the first network distribution success information to the terminal; and
in a case of receiving the second device information from the terminal, sending the second device information to the second device for the second device to send the first network distribution information to a first device corresponding to the second device information included in the at least two first devices.

10. The method according to any one of claims 7-9, wherein before the receiving device information from a terminal, the method further comprises:
receiving a terminal information from the terminal; and
searching for the at least two second devices based on the terminal information;
wherein the sending the device information to a second device comprises:
sending the device information to the at least two second devices in a case of receiving the device information.

11. The method according to any one of claims 7-10, wherein after the receiving device information from a terminal, the method further comprises:
in a case where a duration since the device information is received reaches a second duration, deleting the device information, and sending a first prompt information to the terminal to prompt the terminal to obtain the device information again.

12. The method according to any one of claims 7-11, wherein after the sending the device information to a second device, the method further comprises:
in a case of receiving third network distribution success information, binding the device information to the terminal.

13. A network distribution method, performed by a second device and comprising:
in a case of receiving device information from a server, establishing a communication connection with a first device through the device information, wherein the device information is device information of the first device; and
sending first network distribution information to the first device to perform network distribution on the first device, wherein the first network distribution information is network distribution information of the second device.

14. The method according to claim 13, wherein the in a case of receiving device information from a server, establishing a communication connection with a first device through the device information comprises:
determining a communication address of the first device based on the device information; and
establishing the communication connection with the first device via the communication address.

15. The method according to claim 13 or 14, wherein after the sending first network distribution information to the first device, the method further comprises:
obtaining a signal strength corresponding to a third device, wherein the third device is in communication connection with the second device; and
in a case where the signal strength is within a predetermined strength range, sending the first network distribution information to the third device to perform network distribution on the third device.

16. The method according to claim 15, wherein after the in a case where the signal strength is within a predetermined strength range, sending the first network distribution information to the third device to perform network distribution on the third device, the method further comprises:
sending a second prompt information to a terminal to prompt the user to perform authorization on the third device through the terminal, wherein the terminal is matched with the second device.

17. A network distribution apparatus, performed by a terminal and comprising:
a first obtaining module, configured to obtain device information of a first device while the first device is not network-distributed; and
a first transmission module, configured to send the device information to a server for the server to send the device information to a second device, for causing the second device to send first network distribution information to the first device to perform network distribution on the first device; wherein the first network distribution information is network distribution information of the second device.

18. A network distribution apparatus, performed by a server and comprising:
a first receiving module, configured to receive device information from a terminal, wherein the device information is device information of a first device; and
a second transmission module, configured to send the device information to a second device for the second device to send first network distribution information to the first device to perform network distribution on the first device, wherein the first network distribution information is network distribution information of the second device.

19. A network distribution apparatus, performed by a second device and comprising:
a communication module, configured to establish a communication connection with a first device through the device information in a case of receiving device information from a server, wherein the device information is device information of the first device; and
a third transmission module, configured to send first network distribution information to the first device to perform network distribution on the first device, wherein the first network distribution information is network distribution information of the second device.

20. A network distribution apparatus, **characterized by** comprising:
a memory, storing a program or instructions; and
a processor, configured to execute the program or instructions to perform the method according to any one of claims 1-16.

21. A readable storage medium, storing a program or instructions; wherein the program or instructions is configured to, when executed by a processor, perform the method according to any one of claims 1-16.

22. A computer program product, comprising a computer program; wherein the computer program is configured to, when executed by a processor, perform the method according to any one of claims 1-16.

23. A household device, comprising:
a network distribution apparatus according to any of claims 17 to 20; and/or
a readable storage medium according to claim 21; and/or
a computer program product according to claim 22.
